# EUROPEAN PATENT APPLICATION

(11) **EP 4 813 790 A1**
(43) Date of publication of application: **30.09.2026**
(21) Application number: 26166823.0
(22) Date of filing: 23.03.2026
(51) Int. Cl.: B60W 60/00

(54) **VEHICLE DISENGAGEMENT SYSTEM FOR AUTONOMOUS DRIVING**

(30) Priority: 24.03.2025 US 202519088209
(71) Applicant: Atieva, Inc., Newark, CA 94560 (US)
(72) Inventor: EMERY, Pascal, Newark, CA 94560 (US); JAIN, Puneet, Newark, CA 94560 (US)
(74) Representative: Daub, Thomas

(57) **Abstract**

The invention relates to a method, performed by a controller (112) of a vehicle (104), comprising: engaging in autonomous driving (120) of the vehicle (104), including controlling a steering of the vehicle (104); while engaged in the autonomous driving (120) of the vehicle (104), detecting, through at least one user input device (106), an input (108) from a user (102); detecting, with at least one sensor (119), a position (116) associated with the user (102); determining that the input (108) from the user (102) and the position (116) associated with the user (102) satisfies a condition (118); and in response to the input (108) and the position (116) associated with the user (102) satisfying the condition (118), disengaging the autonomous driving (120) of the vehicle (104).

## Description

### FIELD

Embodiments disclosed relate generally to automobile technology, and more particularly, to a vehicle disengagement system for autonomous driving.

### BACKGROUND

Vehicles may use a combination of sensors, cameras, radar, and artificial intelligence to navigate and operate (e.g., drive) without human input. Autonomous driving systems may use computer-implemented algorithms to process sensor data, as well as map and positioning data, to perceive the vehicle's surroundings. Based on the environment, the autonomous driving system plans a vehicle path and makes decisions (e.g., drive straight, stop, overtake another vehicle, switch lanes, slow down, speed up, etc.). The autonomous driving system may initiate and transmit vehicle control commands to respective actuators to control the vehicle, such as, for example, steering, braking, and throttle.

Vehicles that have autonomous capabilities may also have human machine interfaces that let humans drive the vehicle. For example, an automobile such as a car or truck with an autonomous driving system may also have human controls such as a brake control, a steering wheel, and a throttle, for the human to drive when desired. It is desirable for vehicles to perform intelligent transitions between autonomous driving and manual driving.

The following presents a simplified summary of one or more aspects in order to provide a basic understanding of such aspects. This summary is not an extensive overview of all contemplated aspects. This summary neither identifies key or critical elements of all aspects nor delineates the scope of any or all aspects. Its sole purpose is to present some concepts of one or more aspects in a simplified form as a prelude to the more detailed description that is presented later.

In an aspect of the present disclosure, a method is performed by a controller of a vehicle. The method comprises engaging in autonomous driving of the vehicle, including controlling a steering of the vehicle. While engaged in the autonomous driving of the vehicle, the method comprises detecting, through at least one user input device, an input from a user, detecting, with at least one sensor, a position is associated with the user, and determining that the input from the user and the position associated with the user satisfies a condition. In response to the input and the position associated with the user satisfying the condition, the method disengages the autonomous driving of the vehicle.

In an embodiment, determining that the input from the user and the position associated with the user satisfies a condition comprises determining a first score based at least on the input from the user, determining a second score based on the position associated with the user, and determining that the first score and the second score satisfies the condition.

In an embodiment, the user input device comprises at least one of: a brake control, a steering wheel, or a manual control. The input from the user comprises at least one of: an input to the brake control, a torque applied to the steering wheel, or a press applied to the manual control.

In an embodiment, determining the first score comprises determining a first sub-score based on a displacement or deceleration or both that are associated with the brake control, determining a second sub-score based on a duration of the torque applied to the steering wheel, and/or determining a third sub-score based on the press applied to the manual control. The method determines the first score based on the first sub-score, the second sub-score, and the third sub-score.

In an embodiment, the first score is determined to satisfy the condition in response to when any one of the first sub-score, the second sub-score, or the third sub-score satisfies a threshold. In an embodiment, the first score is determined to satisfy the condition when a combination of the first sub-score and the second sub-score satisfies a second threshold, even when none of the first sub-score, the second sub-score, and the third sub-score individually satisfies the threshold.

In an embodiment, the manual control is a finger actuatable control that is located in the cabin of the vehicle, such as, for example, on a front dashboard, at a console between the driver seat and the front passenger seat, or around the base of the steering wheel. In an embodiment, the manual control is button located on the steering wheel. In an embodiment, the third sub-score that is associated with the manual control is determined to satisfy a threshold in response to detecting a plurality of inputs to the manual control.

In an embodiment, determining the second score based on the position associated with the user comprises: detecting an eye position of the user based on an image of the user captured by a camera, and determining the second score at least based on the eye position of the user.

In an embodiment, determining the second score based on the position associated with the user further comprises detecting whether the user is holding a steering wheel, and determining the second score based on the eye position of the user and based on whether the user is holding the steering wheel, wherein the second score satisfies the condition in response to the eye position of the user satisfying a threshold, and detecting that the user is holding the steering wheel.

In an embodiment, the method further comprises, in response to the first user input and the position associated with the user not satisfying the condition, the method maintains engagement of the autonomous driving of the vehicle.

In an embodiment, the autonomous driving of the vehicle comprises a level 3 autonomous driving. The autonomous driving algorithm may include detecting an environment of the vehicle and actuating the steering, a throttle, or a braking based on the environment.

In an aspect, the operations performed with respect to the method are performed by one or more computing devices. The one or more computing devices may be located onboard the vehicle, such as, for example, a vehicle controller. In an embodiment, the vehicle may comprise an electric vehicle with a motor that converts electrical energy from an onboard battery to rotational energy. The motor may be coupled to an axle of the vehicle, causing wheels of the vehicle to rotate.

In an aspect, a non-transitory computer readable memory stores machine executable instructions that, when executed by a processing device, causes the operations of the method to be performed.

Other technical features may be readily apparent to one skilled in the art from the following figures, descriptions, and claims.

### BRIEF DESCRIPTION OF THE DRAWINGS

The present disclosure will be understood more fully from the detailed description given below and from the accompanying drawings of various embodiments, which, however, should not be taken to limit the embodiments described and illustrated herein, but are for explanation and understanding only.
FIG. 1 shows an example embodiment of an autonomous driving system with enhanced disengagement of autonomous driving, in accordance with an embodiment.
FIG. 2 shows an example embodiment of an autonomous driving system with enhanced disengagement of autonomous driving, in accordance with an embodiment.
FIG. 3 shows a flow diagram of a method for disengaging in autonomous driving of the vehicle, in accordance with an embodiment.
FIG. 4 shows an example flow diagram for an autonomous driving system to disengage in autonomous driving mode, in accordance with an embodiment.
FIG. 5 shows a graph and tables that are associated with a brake control for disengaging autonomous driving, in accordance with an embodiment.
FIG. 6 shows a graph and table associated with steering action for disengaging autonomous driving, in accordance with an embodiment.
FIG. 7 shows a graph and table associated with a manual control for disengaging autonomous driving, in accordance with an embodiment.
FIG. 8 is a high-level view of some embodiments of a vehicle, in accordance with an embodiment.
FIG. 9 is an example of a computer system that may perform autonomous driving and disengagement thereof, in accordance with an embodiment.

### DETAILED DESCRIPTION

In the following description, numerous details are set forth. It will be apparent, however, to one of ordinary skill in the art having the benefit of this disclosure, that the embodiments described herein may be practiced without these specific details. In some instances, well-known structures and devices are shown in block diagram form, rather than in detail, in order to avoid obscuring the embodiments described herein.

Some portions of the detailed description that follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "receiving", "transmitting", "storing", "determining", "accessing", "referencing", or the like, refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage, transmission or display devices.

The embodiments discussed herein may also relate to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions.

The algorithms and displays presented herein are not inherently related to any particular computer or other apparatus. Various general-purpose systems may be used with programs in accordance with the teachings herein, or it may prove convenient to construct a more specialized apparatus to perform the required method steps. The required structure for a variety of these systems will appear from the description below. In addition, the embodiments discussed herein are not described with reference to any particular programming language. It will be appreciated that a variety of programming languages may be used to implement the teachings as described herein.

An autonomous driving system may include a combination of advanced sensors, software, and artificial intelligence (AI). The autonomous driving system may perceive the surroundings, make decisions, and control the vehicle's actions like steering, acceleration, and braking. To sense the vehicle's environment, a vehicle may use a variety of sensors, such as, for example, cameras, radar, lidar (Light Detection and Ranging), and ultrasonic sensors, to gather information about the vehicle's surroundings. Cameras may capture images around the vehicle, which may be processed with object recognition algorithms to detect objects, traffic lights, road signs, and lane markings. Radar sensors may be used by the system to measure the distance and speed of objects, aiding in detecting other vehicles and obstacles. The system may use Lidar to create a 3D map of the environment, improving precision of object detection and distance measurements. The system may use ultrasonic sensors to detect or measure distance to close objects. The system may implement software (e.g., hard coded logic, machine learning models, or a combination thereof) to process the sensor data, map data, recognize objects, and plan a path. For example, the system may include algorithms that identify and classify objects in the environment, such as other vehicles, pedestrians, and traffic signs, and use the sensor data and object recognition to plan a safe and efficient path for the vehicle. Further, algorithms may help the vehicle make decisions about steering, acceleration, and braking, based on the current situation and traffic conditions. The system may generate and transmit commands to the vehicle's actuators, to control the steering, acceleration, and braking of the vehicle.

In different embodiments, a vehicle with an autonomous driving system may have different propulsion systems. For example, an electric vehicle may have an electric motor, traditional vehicles may use an internal combustion engine (ICE), and hybrid vehicles may use a combination of a motor and ICE for propulsion.

Vehicles that have autonomous capabilities may also have human machine interfaces that let humans drive the vehicle. For example, a car or truck with an autonomous driving system may also have human controls such as a brake control, a steering wheel, and a throttle, for the human to drive when desired.

Autonomous driving systems have been categorized by the society of automotive engineers (SAE) has having different autonomy levels, ranging from no automation (Level 0) to full automation (Level 5).

Level 1 is generally limited to driver assistance features like adaptive cruise control and lane-keeping assist.

Level 2 is partial automation of driving, where the vehicle performs some driving tasks autonomously, but the driver must remain attentive and ready to take control.

Level 3 is a near complete autonomous driving, where the vehicle can handle all or most driving tasks in some conditions, but the driver must be present and ready to take over at a moment's notice. Under Level 3 self-driving, also referred to as conditional driving automation, the vehicle can handle steering, acceleration, and braking under specific, limited conditions. The driver may take their hands off the steering wheel and eyes off the road, but the driver is to remain ready to intervene when the system requests it, or if conditions fall outside of the specified parameters.

Level 4 is an even higher level of automation where the vehicle can handle all driving tasks, but the driver may still be present.

Level 5 is often referred to as full automation, where the vehicle can handle all driving tasks in all conditions, without a driver.

An important distinction between Level 2 and Level 3 systems (and above), is that Level 3 and above allows the driver to take their eyes off the road and hands off the wheel under certain conditions. Unlike Level 2 systems, Level 3 systems are designed to prevent accidental disengagement by the driver, such as pressing the brakes or touching the steering wheel by mistake. With this advancement also comes the need for a robust system to determine when it is safe for the driver to resume control of the vehicle.

In an aspect, an autonomous driving system may include a human override system, which may include a combination of hardware and/or software that switches to control from autonomous driving mode to human controlled driving, under certain circumstances such as when a human initiates a reclaiming of the driving system. The autonomous driving system may implement a detection system that improves seamless and safe transitions between autonomous and manual driving modes, while also improving and promoting driver attentiveness.

In an aspect, the human override system may perform a method of determining when to disengage the autonomous driving and switch to manual driving. The method determines this based on detecting driver readiness, and inferring driver intent. To detect the driver's intention to take over, the system may apply safeguarding operations to avoid accidental or premature disengagement of the autonomous driving and engagement of manual driving.

In an example of detecting driver intent, the system can require a single user input that exceeds a certain duration, a double press, or two separate inputs pressed simultaneously, or a combination thereof. To detect and ensure that the driver is in control of the vehicle's lateral movement when taking over, the system include activation controls on the steering wheel or confirm that the driver is holding the steering wheel, or both. These measures verify that the driver's intention to take over is clear and deliberate, while simultaneously confirming that the driver is in control of the vehicle, as a condition for disengagement.

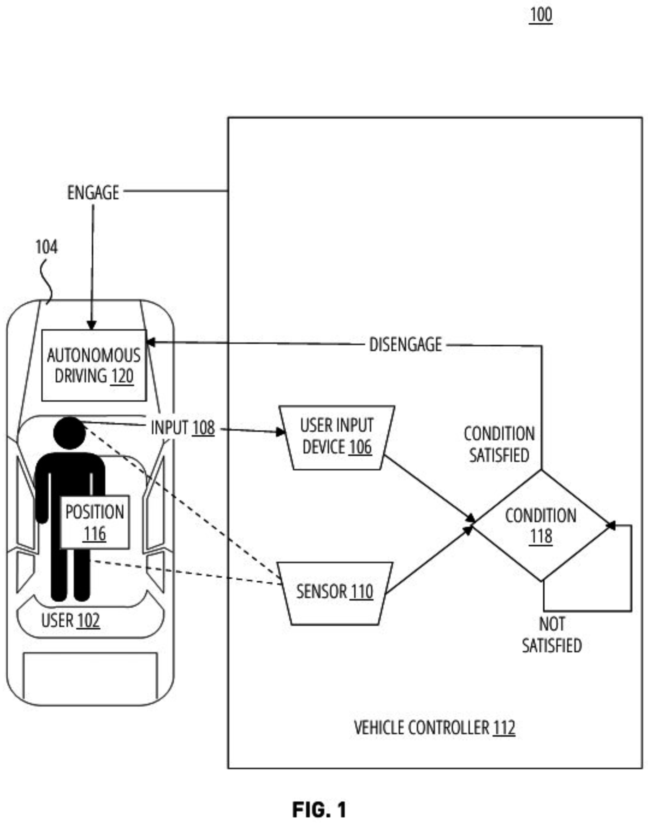

FIG. 1 shows an example embodiment of an autonomous driving system with enhanced disengagement of autonomous driving, in accordance with an embodiment. It should be understood that features and embodiments that are described with respect to any one of the figures may extend to or correspond with features that are described in connection with another figure.

An autonomous driving system 100 is shown that may perform operations for enhanced disengagement of autonomous driving. The autonomous driving system 100 may comprise a vehicle controller 112, at least one user input device 106, and at least one sensor 110 of a vehicle 104. The vehicle controller 112 may comprise a single computing device, or multiple computing devices, which may be configured to communicate with other vehicle devices such as, for example, computing devices, a camera, actuators, sensors, a communication bus, transceivers, etc. The vehicle controller 112 may reside at least partially within vehicle 104. Vehicle 104 may be a an automobile such as, for example, a car, truck, bus, etc., that includes wheels, steering, braking, and an electric or combustion based propulsion system.

The vehicle controller 112 may engage in autonomous driving 120. For example, a user 102, which may be a driver of the vehicle 104 seated in a designated driver's seat, may provide one or more inputs to a vehicle controller 112 through one of the at least one user input device 106. In response, the vehicle controller 112 may engage in autonomous driving 120, which may include controlling the vehicle 104 steering, throttle, and/or braking of the vehicle 104, without input from user 102. The vehicle controller 112, while performing autonomous driving 120, may issue these control commands in a coordinated manner to drive the vehicle 104 along a desired vehicle path, in accordance with a detected environment of the vehicle, and other factors such as, for example, an intended destination, traffic signs, lights, road markings, pedestrians, other vehicles, objects, etc. Various autonomous driving algorithms are known and may be implemented, without departing from the scope of the present disclosure. Autonomous driving 120 may comprise a Level 2, Level 3, Level 4, or Level 5 autonomous driving mode, based on the SAE standard.

While engaged in the autonomous driving 120 of the vehicle 104, the vehicle controller 112 is configured to detect, through at least one user input device 106, an input 108 from the user 102. At the same time (e.g., simultaneously and in parallel), the vehicle controller 112 is configured to detect, with at least one sensor 110, a position 116 that is associated with the user 102.

The vehicle controller 112 analyzes the input 108 from the user and the position 116 associated with the user 102, and determines whether the input 108 and the position 116 of the user 102 satisfies a condition 118. In response to the input 108 and the position 116 satisfying the condition 118, the vehicle controller 112 disengages the autonomous driving 120 of the vehicle 104.

In an embodiment, user input 108 may comprise a user interaction with a user input device 106 such as, for example, a steering wheel, a manual control, and/or a brake control. The user input 108 may be processed and scored based on duration, torque, displacement, interaction count, and/or other factors that indicate how intentional the user input 108 is, as described further in other sections.

Additionally, or alternatively, position 116 of the user 102 may comprise a detected eye position (e.g., a gaze direction and/or open and close state of the eye) or a detected hand position of the user (e.g., whether the user is holding the steering wheel) or both. The position 116 may be scored based on whether the position 116 of the user falls within a target range or threshold, as described in further detail in other sections.

In this manner, the vehicle controller 112 may only disengage in the autonomous driving 120 when the vehicle controller 112 infers that the user 102 intends to switch to manual driving (through input 108) and is sufficiently attentive to take control of the vehicle (through user position 116). In response to the first user input 108 and the position 116 associated with the user 102 not satisfying the condition 118, the vehicle controller 112 maintains engagement of the autonomous driving 120 of the vehicle. While remaining in autonomous driving 120, the vehicle controller 112 continues to plan the vehicle path and command the vehicle accordingly through steering, throttle, and/or brake commands. When the autonomous driving 120 is disengaged, the vehicle controller 212 may cease commanding the steering, braking, throttle, etc., as well as cease path planning, vehicle environment detection, and/or other operations associated with autonomous driving.

The vehicle controller 112 may continuously monitor the one or more user input devices 106 and the one or more sensors 110 while autonomous driving 120 is ongoing, to detect, in real-time, when the user intends to and is ready to take control of the vehicle 104.

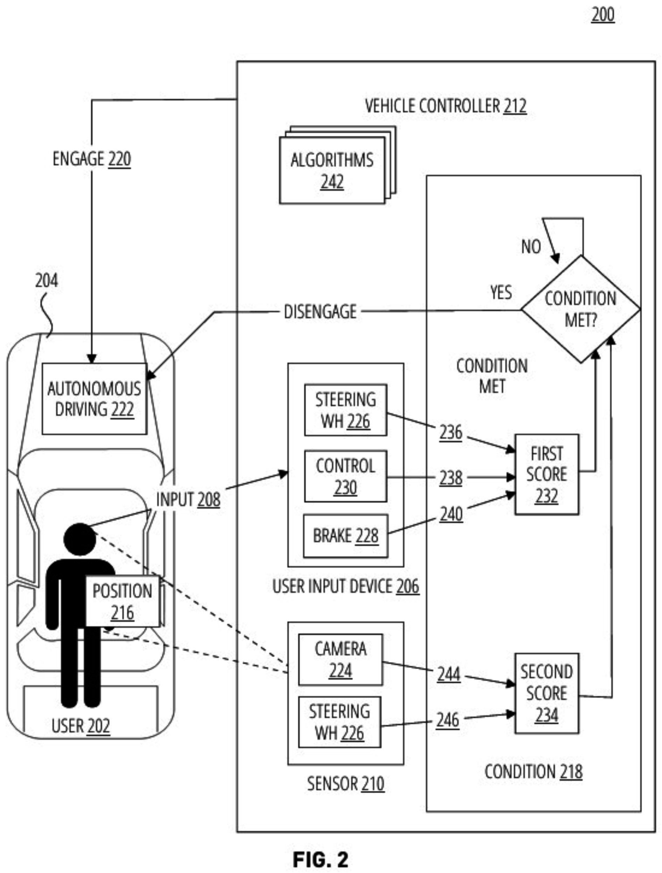

FIG. 2 shows an example embodiment of an autonomous driving system with enhanced disengagement of autonomous driving, in accordance with an embodiment. It should be understood that features and embodiments that are described with respect to any one of the figures may extend to or correspond with features that are described in connection with another figure.

An autonomous driving system 200 is shown that may perform operations for enhanced disengagement of autonomous driving. The autonomous driving system 200 may comprise a vehicle controller 212, at least one user input device 206, and at least one sensor 210 of a vehicle 204.

The vehicle controller 212 may engage in autonomous driving 222. For example, a user 202, which may be a driver of the vehicle 204 seated in a designated driver's seat, may provide one or more inputs to a vehicle controller 212 through one of the at least one user input device 206. In response, the vehicle controller 212 may engage in autonomous driving 222, which may include controlling the vehicle 204 steering, throttle, and/or braking of the vehicle 204, without input from user 202. The vehicle controller 212, while performing autonomous driving 222, may issue these control commands in a coordinated manner to drive the vehicle 204 along a desired vehicle path, in accordance with a detected environment of the vehicle, and other factors such as, for example, an intended destination, traffic signs, lights, road markings, pedestrians, other vehicles, objects, etc. Various autonomous driving algorithms are known and may be implemented, without departing from the scope of the present disclosure.

While engaged in the autonomous driving 222 of the vehicle 204, the vehicle controller 212 is configured to detect, through at least one user input device 206, an input 208 from the user 202. At the same time (e.g., simultaneously and in parallel), the vehicle controller 212 is configured to detect, with at least one sensor 210, a position 216 that is associated with the user 202.

The vehicle controller 212 analyzes the input 208 from the user and the position 216 associated with the user 202, and determines whether the input 208 and the position 216 of the user 202 satisfies a condition 218. In response to the input 208 and the position 216 satisfying the condition 218, the vehicle controller 212 disengages the autonomous driving 222 of the vehicle 204.

In an embodiment, vehicle controller 212 may determine that the input 208 and the position 216 satisfies the condition 218 based on a determining one or more scores associated with each. For example, vehicle controller 212 may determine a first score 232 based at least on the input 208, and determine a second score 234 based on the position 216. In response to the first score 232 and the second score 234 satisfying the condition 218, the vehicle controller 212 may disengage autonomous driving 222. In an embodiment, the vehicle controller 212 in response to both the first score and the second score satisfying a threshold, (e.g., both the first score and second score are true, or satisfy respective numerical thresholds), the vehicle controller 212 determines that the condition 218 is satisfied. Otherwise, the vehicle controller 212 may maintain autonomous driving 222.

In an embodiment, the user input device 206 comprises at least one of: a steering wheel 226, a manual control 230, or a brake control 228. The manual control 230 can be a button, toggle, lever, knob, dial, selector, switch, or other manual control that is operable by a hand or fingers. In an embodiment, the manual control 230 may be a capacitive touch sensor that senses input 208 as a touch. Manual control 230 may be located in the cabin of the vehicle, such as, for example, on a vehicle dashboard, the steering wheel, or elsewhere in the cabin. In an embodiment, the user input device 206 comprises at least two, or all three of the steering wheel 226, the manual control 230, and the brake control 228. In such a case, the vehicle controller 212 may monitor the status of each of the user input devices 206 in parallel. The vehicle controller 212 may determine a respective sub-score for each, and combine the respective scores to determine the first score 232. In such a case, each of the respective sub-scores may be determined in parallel based on a duration, quantity, and/or amount associated with the user's input 208 on each user input device 206. The sub-scores 236, 238, 240, first score 232 and/or second score 234 may be determined simultaneously and continuously (e.g., in periodic cycles) to monitor the real-time behavior of user 202.

In an example, the input 208 from the user 202 may comprise at least one of: a torque applied to the steering wheel 226, a press applied to the manual control 230, or a movement of the brake control 228. To determine the first score 232, the vehicle controller 212 may determine sub-score 236 based on a duration of the torque applied to the steering wheel, determine sub-score 238 based on the press applied to the manual control 230, and/or determine sub-score 240 based on a displacement or deceleration or both that are associated with the brake control 228. In an embodiment, if any one of the sub-scores 236, 238, and 240 satisfy their respective thresholds, first score 232 is determined is generated with a value (e.g., set to TRUE) that satisfies condition 218. In an embodiment, even when none of the sub-scores are satisfied, 212 may combine two or more of the sub-scores (e.g., sub-scores 236 and 240), and if the combination satisfies a second threshold, first score 232 is set to satisfy condition 218. A score or sub-score may be assigned a zero in instances where the user has not interacted with the respective user input device 206. For example, if at a first instance, the user applies a torque to the steering wheel 226 and simultaneously applies a force on the brake control 228, but leaves the manual control 230 untouched, then the corresponding sub-score 238 for the manual control may be zero, while the other sub-scores (e.g., 236, 240) will be calculated as non-zero. Example operations for calculating the sub-scores are described in other sections.

In an embodiment, the manual control 230 is located on the steering wheel 226 of the vehicle. The manual control 230 may be a spring-loaded button or a capacitive touch button, or another kind of finger-actuated control. In an embodiment, the second sub-score 238 is increased by the vehicle controller 112, based on a duration of the press, or based on detecting a second press applied to the manual control 230. The press can include a pull, a touch, a push, or other contact from the user 202 upon the manual control 230.

In an embodiment, the sensor 210 comprises a camera 224. Camera 224 may be configured to capture images of the user 202 within the cabin of the vehicle 204. The vehicle controller 212 may determine the second score 234 based on the or the position 216 associated with the user 202, by detecting an eye position of the user 202 based on an image of the user captured by a camera 224. The vehicle controller 212 may determine the second score 234 at least based on the eye position of the user.

Vehicle controller 212 may perform algorithms 242 which may be stored in computer readable memory, to determine each of the sub-scores and scores. Algorithms 242 may include eye tracking or gaze tracking algorithms. Eye tracking and gaze tracking algorithms are processing technology utilizing images captured by camera 224, to ultimately detect where a user is looking, which may be in real-time. These algorithms process data from sensors and cameras to track the movement and position of the eyes, which may be used to determine second score 234. The determined eye position indicates a visual attention and cognitive process of user 202. Camera 224 may represent one or more cameras configured to capture images or video of the face and/or eyes of user 202. In an embodiment, camera 224 may comprise an infrared camera and/or a standard camera. Algorithms 242 may include object recognition algorithms that detect key features of the eyes, such as the pupil, iris, and corneal reflections. The algorithms may detect the position of the pupil and the reflection of the light source on the cornea. By analyzing these features, the algorithms 242 may estimate the direction or point of gaze of user 202 in three-dimensional space. This can involve mapping the position of the pupil to three-dimensional coordinates. Algorithms 242 may process the image data from camera 224 in real-time, to determine immediate and continuous gaze and eye position of the user 202. Algorithms 242 may include machine learning models and computer vision which enhances accuracy of the gaze tracking and eye position tracking.

In an embodiment, determining the second score 234 based on the position 216 further comprises detecting whether the user is holding steering wheel 226. The steering wheel 226 may comprise one or more sensors such as, for example, capacitive sensors, buttons, torque sensors, position sensors, and/or other sensors to detect contact and/or grip strength of the user 202 on the steering wheel 226. The vehicle controller 212 may monitor signals from one or more of the sensors to detect whether the user is holding the steering wheel, or if the hold is sufficient to indicate control of the steering wheel, or both. In an embodiment, one or more capacitive touch sensors may be monitored to determine that one hand or both hands of the user is gripping the steering wheel. In an embodiment, the vehicle controller 212 may monitor torque values from the torque sensor either instantaneously, or over time, to detect whether the user is holding the steering wheel. The vehicle controller 212 may compare the sensed torque value to a minimum torque threshold, which may be less than the torque threshold used to detect user input 208. In an embodiment, algorithms 242 may process images from camera 224 to detect (e.g., with object recognition and computer vision) whether the user 202 is holding with one or both hands, the steering wheel 226. Vehicle controller 212 may determine the second score 234 based on a combination of the eye position and based on the whether the user is holding the steering wheel.

In an embodiment, vehicle controller 212 determines the second score as satisfying the condition 218 in response to when the eye position is within a target range, and when the hand position is detected to be holding the steering wheel. Otherwise, the second score 234 is set to not satisfy the condition 218. In an embodiment, a fourth sub-score 244 may be determined based on the eye position, and a fifth sub-score 246 may be determined based on the user's hold (or lack thereof) of the steering wheel. In an example, the fourth sub-score 244 may be determined based on whether the user's eye gaze direction is within a target range (e.g., forward or in the direction of driving), where the score decreases as the gaze direction veers further from the target range and increases as the gaze direction is detected to be closer to the target range.

In an embodiment, a fifth sub-score 246 may be determined based on whether the user's grip is detected on the steering wheel 226. In an example, if both hands are detected on the steering wheel 226, and/or the detected hand position is at or near a target position, then the fifth sub-score 246 may be increased. If less than two hands are detected to grip steering wheel 226, or the position of the hands on the steering wheel 226 are not in a target position, then the fifth sub-score 246 is decreased. If the fifth score 246 satisfies its respective threshold, then the vehicle controller 212 determines that the user's hands are holding the steering wheel.

In an embodiment, the vehicle controller 212 will set the second score 234 to satisfy condition 218 in response to when the hand position is deemed to be holding the wheel and when the eye position is within the target range. Otherwise, the second score 234 is set to not satisfy the condition 218.

In an embodiment, the method further comprises, in response to determining that the condition 210 is not satisfied, the vehicle controller 212 maintains engagement of the autonomous driving 222 of the vehicle. The vehicle controller 212 may, while in autonomous driving 120, continue to detect the user input 208 and position 216, to determine the sub-scores 236, 238, 240, 244, and 246, and to determine the first score 232 and the second score 234, and determine whether the condition 218 is satisfied.

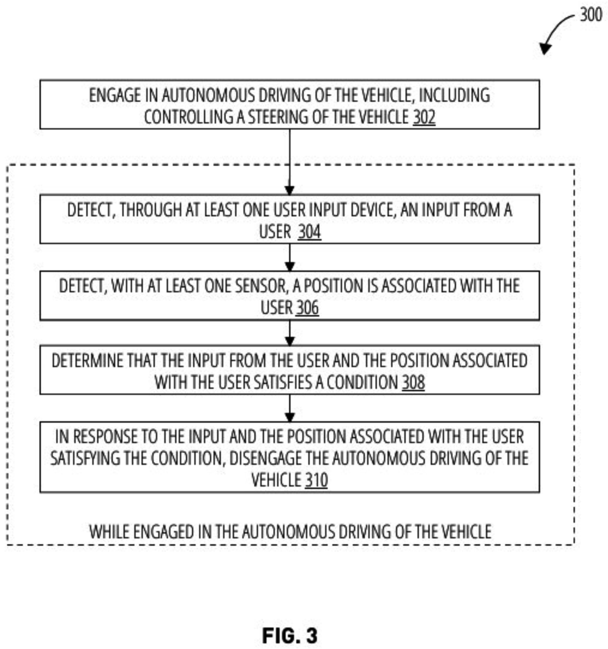

FIG. 3 shows a flow diagram of a method 300 for disengaging in autonomous driving of the vehicle, according to an embodiment. The method 300 may be performed by processing logic that may comprise hardware (circuitry, dedicated logic, etc.), software (such as is run on a general purpose computer system or a dedicated machine), firmware, or a combination. The method 300 may be performed by a plurality of processors in a distributed architecture and/or a microservices architecture. Method 300 may be performed by an autonomous driving system, as described in other sections.

At block 302, processing logic may engage in autonomous driving of the vehicle, including controlling a steering of the vehicle. While engaged in the autonomous driving of the vehicle, processing logic may perform the remaining blocks 304, 306, 308, and 310. Once autonomous driving is disengaged, processing logic may halt the operations of those blocks. Processing logic may determine whether the vehicle is performing autonomous driving based on a vehicle status, which may be determined based on data held on a corresponding computing device (e.g., over a communication bus, etc.) and/or stored locally and accessible to processing logic (e.g., in memory).

At block 304, processing logic detects, through at least one user input device, an input from a user. In an embodiment, the user input device comprises at least one of: a steering wheel, a manual control, or a brake control. The input from the user comprises at least one of: a torque applied to the steering wheel, a press applied to the manual control, or a movement of the brake control. In an embodiment, the user input devices comprises at least two of a steering wheel, a manual control, or a brake control, or all three. In an embodiment, the manual control is located on the steering wheel.

At block 306, processing logic detects, with at least one sensor, a position that is associated with the user. The sensor may be a camera directed at a driver, or a sensor (e.g., a torque sensor or capacitive touch sensor) that is configured to detect a torque on the steering wheel, or human hold on the steering wheel, or a both. The position may comprise a position of the driver's eyes, or hands (e.g., relative to the steering wheel), or both.

At block 308, processing logic determines that the input from the user and the position associated with the user satisfies a condition. In an embodiment, determining that the input from the user and the position associated with the user satisfies the condition comprises determining a first score based at least on the input from the user, determining a second score based on the position associated with the user, and determining that the first score and the second score satisfies the condition.

In an embodiment, determining the first score comprises determining a first sub-score based on a duration of the torque applied to the steering wheel, determines a first sub-score based on a displacement or deceleration or both that are associated with the brake control, determines a second sub-score based on a duration of the torque applied to the steering wheel, and determines a third sub-score based on the press applied to the manual control. Processing logic determines the first score based on the first sub-score, the second sub-score, and the third sub-score.

In an embodiment, processing logic may apply a logic-based rule that compares each sub-score to a threshold, and if all sub-scores satisfy the threshold, processing logic may set the first score to a value that satisfies the condition (e.g., TRUE, an enumeration, or a numerical value above a set threshold). The sub-score thresholds may be the same (e.g., a normalized threshold, or different for each sub-score), while still achieving the same result. In an embodiment, processing logic increases the sub-score associated with the manual control, based on a duration of the press, or based on detecting a second press applied to the manual control, so that the respective threshold is satisfied when multiple presses are detected or when a single press is held for a threshold time. Additionally, or alternatively, processing logic may determine the first score based on a combination (e.g., multiplication and/or addition) of two or more of the sub-scores, which may be weighted. In an embodiment, processing logic may combine the sub-scores associated with the steering wheel and the brake control. For example, even when none of the individual sub-scores satisfy a first threshold, processing logic may still set the first score to satisfy the condition in response to when the combined score satisfies a second threshold. This second threshold may be greater than the first threshold.

In an embodiment, determining the second score based on the position associated with the user comprises detecting an eye position of the user based on an image of the user captured by a camera, and determining the second score at least based on the eye position of the user. For example, processing logic may process an image or stream of images from a camera that is directed toward a face of the vehicle driver, and apply a computer vision algorithm to detect the gaze direction of the user. If the gaze direction is within a target range (e.g., in alignment with the vehicle direction or a forward direction of the vehicle), then a fifth sub-score may be assigned a score that satisfies a respective threshold, and the second score may be set to satisfy the condition, at least based on the fifth sub-score satisfying the threshold. Otherwise, the second score may be set to not satisfy the condition.

In an embodiment, determining the second score based on the position associated with the user further comprises detecting whether the user is holding a steering wheel; and determining the second score based on the eye position of the user and based on whether the user is holding the steering wheel. Processing logic may set the second score to satisfy the condition in response to the eye position of the user satisfying the threshold, and detecting that the user is holding the steering wheel. Otherwise, the second score may be set to not satisfy the condition (e.g., FALSE, or a numerical value that fails to satisfy the condition).

In an embodiment, block 304 and processing of sensors to determine that the input from the user satisfies the condition is performed in parallel with block 306 and processing of respective sensors or devices to determine the user position satisfies the condition.

At block 310, in response to the input and the position associated with the user satisfying the condition, processing logic disengages the autonomous driving of the vehicle. In response to the first user input and position associated with the user not satisfying the condition, processing logic may maintain the engagement of the autonomous driving of the vehicle.

In an embodiment, the autonomous driving of the vehicle comprises a Level 2, Level 3, Level 4, and/or Level 5 autonomous driving that includes detecting an environment of the vehicle and actuating the steering, a throttle, and/or a braking based on the environment.

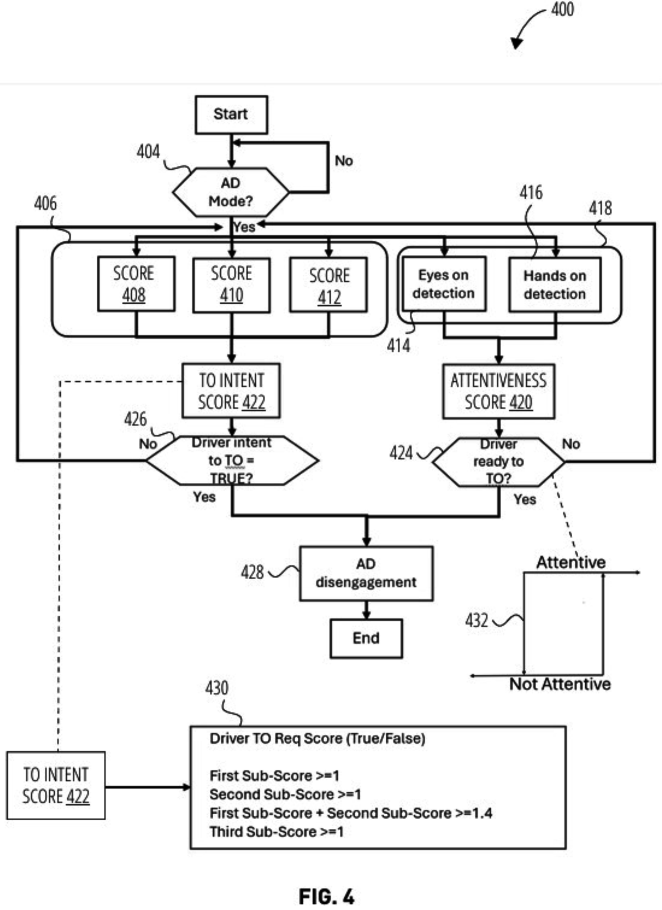

FIG. 4 shows an example flow diagram for an autonomous driving system to disengage in autonomous driving mode, in accordance with an embodiment. Features described with respect to this flow diagram may extend to the autonomous driving system described in other figures, and vice versa.

At block 404, when the vehicle is in autonomous driving mode, the driver of the vehicle may go hands free and eyes off. In an embodiment, the autonomous driving mode may be an SAE Level 3 autonomous driving mode or above. In an embodiment, the autonomous driving mode may be an SAE Level 2 autonomous driving mode or above.

At block 404, the autonomous driving system 400 may continuously monitor a system status. If the current system status indicates that the driving mode is in autonomous driving mode (e.g., L2, L3, or above), the autonomous driving system 400 will proceed to blocks intent scoring block 406 and attentiveness scoring block 418. If the system indicates that the driving mode is not in the autonomous driving mode, the autonomous driving system 400 may continue to monitor the system status.

Assuming that the vehicle is in autonomous driving mode, the autonomous driving system 400 may proceed to intent scoring block 406 where the autonomous driving system 400 may continuously calculate scores sub-scores such as, for example, sub-score 408, sub-score 410, sub-score 412 to determine whether the driver is indicating an intent to takeover (TO) driving of the vehicle.

Driver intent to takeover may be determined based on driver actions and scoring of the driver actions. If the driver intends to take over the vehicle driving, the driver may perform multiple actions. The autonomous driving system 400 may determine a score for each action (e.g., based on a pre-determined lookup table, a machine learning model, algorithm, or combination thereof). In an example, the intent scoring block 406 may determine a driver intent takeover score takeover intent score 422 based on three sub-scores (e.g., sub-score 408, sub-score 410, sub-score 412). It should be understood, however, that such an example is not limiting. For example, additional factors and/or human machine input mechanisms can be processed to generate more or less scores.

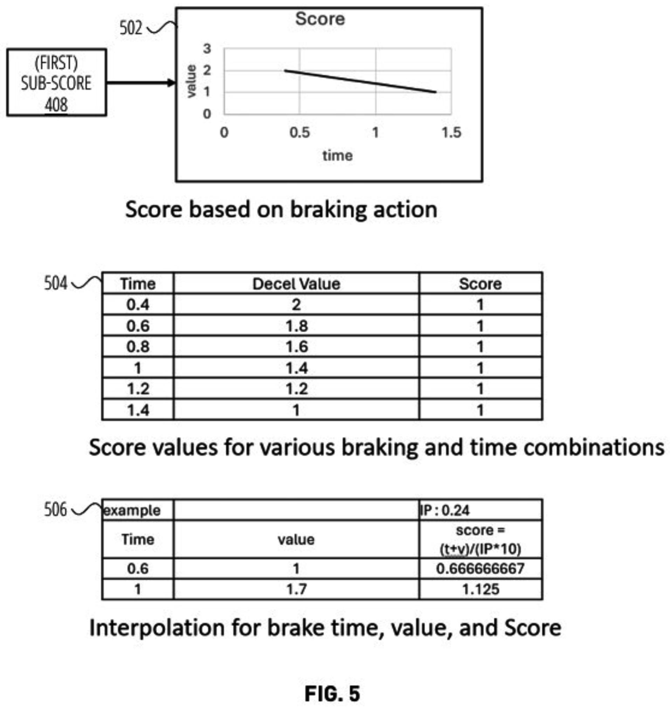

Autonomous driving System 400 may determine a first sub-score 408 based on a braking input or action. The autonomous driving system 400 may determine the first sub-score based on a driver depressing the brake control (e.g., a foot pedal). The autonomous driving system 400 may determine the first score based on the detected deceleration, a deceleration threshold and/or a duration of the brake action, as shown, for example, as shown in FIG. 5.

FIG. 5 shows a graph 502 and tables 504 and 506 that are associated with scoring a user's interaction with a brake control for disengaging autonomous driving, in accordance with an embodiment. In FIG. 5, graph 502 shows an example measuring a braking value (e.g., deceleration command) with respect to time. Additionally, or alternatively, the braking value may comprise a displacement of the brake control caused by the driver. Table 504 shows sub-score 408 values for various braking and time combinations. Table 506 shows an example of interpolating the score based on brake time, the brake value. With reference to FIG. 5, if the driver presses the brakes to achieve a deceleration greater than 2 meters per second squared (m/s²) for 400 milliseconds (ms), this indicates urgency in taking over. In this case, autonomous driving system 400 may determine sub-sub-score 408 with a value of 1. If the driver brakes at 1.8 m/s² for 600 ms, Sub-score 408 will also reach 1. The minimum time for pressing the brake pedal to award a non-zero score may be, for example, 350 ms, 400 ms, 450 ms, or other time threshold. The minimum braking demand (e.g., deceleration) to award a non-zero score may be, for example, .75 m/s², 1 m/s². 1.25 m/s², or another minimum braking demand threshold. For example, referring to table 504 and 506, each of the deceleration values may satisfy the deceleration threshold for a threshold time, and therefore, autonomous driving system 400 assigns a non-zero value to sub-score 408. If the deceleration values is detected below the threshold, then autonomous driving system 400 considers this as a misapplication of the brake pedal and assigns no score or a zero value score. In an embodiment, autonomous driving system 400 may perform interpolation. Interpolation can be applied to determine the values of sub-score 408 based on deceleration and time, so long as the deceleration threshold for the braking is satisfied. Examples of interpolation results are shown, for example, in table 506.

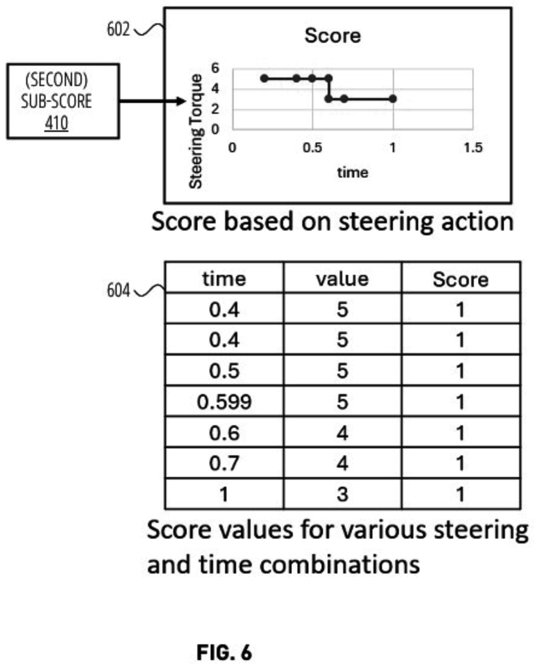

Autonomous driving system 400 may determine sub-score 410 based on detecting a driver's steering action, as shown in FIG. 6. FIG. 6 shows a graph and table associated with scoring a driver's steering action for disengaging autonomous driving, in accordance with an embodiment. The sub-score 410 may be calculated by autonomous driving system 400 based on the driver providing a steering action that meets a torque threshold and/or duration. In an embodiment, a torque sensor may be integral to a steering wheel and configured to sense a torque applied to the steering wheel. For example, a torque sensor may be located at a steering column of the steering wheel to sense the torque on the steering wheel. Graph 602 shows an example of detecting a steering torque with respect to time.

Table 604 shows example scores determined from different steering torque and duration values. For example, if the driver applies a steering torque of 5 Nm for 0.4 seconds, the autonomous driving system 400 may assign the sub-score 410 with a value of 1. If the driver applies a steering torque of 3 Nm for 1 second, the autonomous driving system 400 assigns the 410 with a value also of 1. The autonomous driving system 400 may apply a threshold (e.g., a minimum time) for a steering action to be considered and contribute to a positive score, such as, for example, 300 ms, 400 ms, 500 ms, etc. Similarly, the autonomous driving system 400 may apply a second threshold (e.g., a minimum torque value) for the steering action to be considered and contribute to a positive score, such as for example, 2 Newton meters (Nm), 3 Nm, or 4 Nm, or another suitable torque threshold. For example, if the steering torque value is less than the threshold (e.g., 3Nm), then the detected steering input is considered to be a non-intentional application of steering and no score or a zero score is assigned to sub-score 410. In an example, autonomous driving system 400 may apply interpolation to determine the sub-score 410, based on the steering wheel torque and duration of the action, so long as the torque threshold or both thresholds (torque and time) are reached. Interpolating to determine the score may reduce the reaction time of the autonomous driving system 400 be reducing the duration of time required for the respective sub-sub-scores 408 and 410 to be large enough to trigger a takeover.

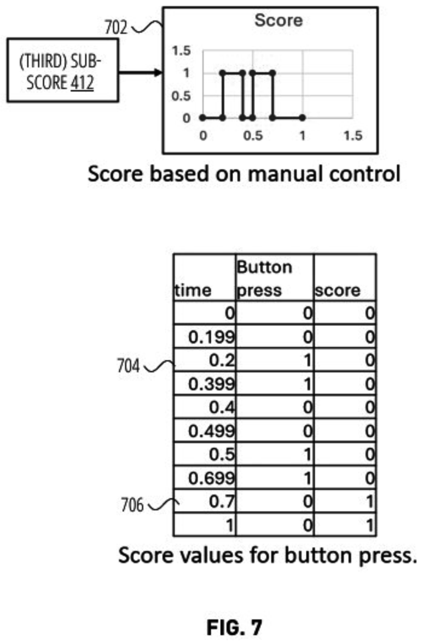

FIG. 7 shows a graph and table associated with scoring a driver's interaction with a manual control, for disengaging autonomous driving, in accordance with an embodiment. A manual control, such as, for example, a spring-loaded button, a capacitive touch button, a touch screen, a toggle, a lever, a knob, a dial, a switch, or other manually operable control, may receive an input (e.g., a press, pull, touch, rotation, etc.) from a driver. Autonomous driving system 400 may monitor the signal associated with the manual control, to detect the user input. The autonomous driving system 400 may determine sub-score 412 based on the driver providing an input on the manual control for a threshold duration. For example, graph 702 shows that an autonomous driving system 400 may detect a driver actuating the manual control over a period of time. In an embodiment, autonomous driving system 400 may detect multiple user actuations (e.g., multiple button presses, etc.) within threshold time (e.g. 1s) or based on a long hold (2s). Table 704 shows example scores calculated for button presses. The autonomous driving system 400 may score the sub-score 412 as zero with only a single button press. At line item 706 a second user input, such as a press, is detected (at .5 to .699 second) through the manual control. In response, the autonomous driving system 400 assigns a score of 1 to sub-score 412, so that sub-score 412 satisfies the threshold. Additionally, or alternatively, a single long hold may also satisfy the threshold, in which case, autonomous driving system 400 sets the score for 412 to 1.

Referring back to FIG. 4, autonomous driving system 400 may determine a takeover intent score 422 based on each or every one of the sub-sub-scores 408, 410, 412. In an embodiment, autonomous driving system 400 may analyze all the individual scores to determine takeover intent score 422. Takeover intent score 422 may also be referred to as a first score, such as described in FIG. 1, FIG. 2 and FIG. 3. In an embodiment, the takeover intent score 422 may be determined based on an individual sub-score, or based on combining two or more of the scores.

For example, autonomous driving system 400 may apply a rule-based algorithm such as shown in block 430. The autonomous driving system 400 may set takeover intent score 422 to TRUE if a first sub-score (e.g., sub-score 408) satisfies a first threshold (e.g., 1), or if a second sub-score (sub-score 410) satisfies the first threshold, or if the third sub-score (412) satisfies the first threshold, or if a combination of two or more of the sub-scores satisfies a second threshold (e.g., 1.4) which may be greater than the first threshold. In such a manner, if any one of the first sub-score, the second sub-score, or the third sub-score satisfies a first threshold then autonomous driving system 400 may takeover intent score 422 as TRUE (or a numerical value indicating true). Additionally, or alternatively, even when the autonomous driving system 400 determines that none of the individual scores satisfies the threshold, autonomous driving system 400 may combine the first sub-score (e.g., sub-score 408 which is associated with a braking score) and the second sub-score (e.g., sub-score 410 which is associated with a steering command), and if this combination (e.g., an addition, multiplication, or weighted operation thereof) is greater than a second threshold (e.g., 1.4, 1.8, etc.), then the takeover intent score 422 may be set to TRUE.

At block 426, in response to the takeover intent score 422 satisfying a threshold (e.g., being TRUE), autonomous driving system 400 may proceed to autonomous driving disengagement block 428. Otherwise, the autonomous driving system 400 may return to block 404 and continue to process the user inputs, so long as autonomous driving is still ongoing.

The autonomous driving system 400 may process attentiveness scoring block 418 in parallel with intent scoring block 406, to determine attentiveness score 420 in parallel with takeover intent score 422. The attentiveness score 420 may be referred to as a second score, as described in other sections. The autonomous driving system 400 may determine attentiveness score 420 based on detecting whether the driver is paying attention to the road, and whether the driver has taken the lateral control of the vehicle.

In an embodiment, at hands on detection block 416, autonomous driving system 400 may determine whether a user is in lateral control of the vehicle (e.g., controlling steering) based on detecting that a user is holding the steering wheel with the user's hands. This detection may be based on a capacitive sensor which may be located on the steering wheel at one or more positions on the steering wheel. Additionally, or alternatively, autonomous driving system 400 may detect that the user is holding the steering wheel based on detecting movement of the steering wheel (e.g., a slight steering nudge < 2 Nm, 1.5 Nm, etc.). The nudge detection threshold may be lower than the threshold used to determine sub-score 410.

At eyes on detection block 414, autonomous driving system 400 may process a camera that is configured to capture the driver inside the vehicle cabin. The autonomous driving system 400 processes the driver monitoring camera feed using object recognition, gaze tracking, and/or computer vision, as described, to detect whether the driver is aware of the road situation.

Autonomous driving system 400 may determine attentiveness score 420 based on the detected gaze of the user, and based on the user's hold or lack thereof, on the steering wheel.

For example, the autonomous driving system 400 may assign points to the attentiveness score 420 when the driver's eyes are open and the gaze direction is within a target range directed in the direction of the vehicle trajectory, and when the driver has one or two hands on the steering wheel. The autonomous driving system 400 may reduce the points assigned to attentiveness score 420, if the gaze is detected to deviate from the target range, and when the driver has no hands on the steering wheel. If the driver is not ready (for example attentiveness score < 90%), then the autonomous driving system 400 may return to block 404 and continue to detect attentiveness score 420, while autonomous driving is engaged. If attentiveness score 420 satisfies an attentiveness threshold (e.g., >=90%), then the driver attentiveness score 420 may be set to TRUE, and autonomous driving system 400 proceeds to autonomous driving disengagement block 428.

In an embodiment, the autonomous driving system 400 may introduce hysteresis 432 as it determines the attentiveness score 420, to reduce jitter of the attentiveness score 420 between TRUE and FALSE. For example, autonomous driving system 400 may use different attentiveness thresholds for setting attentiveness score 420 to TRUE and FALSE.

At block 428, autonomous driving system 400 may disengage autonomous driving, based on the takeover intent score 422 and the attentiveness score 420. In an embodiment, autonomous driving system 400 will disengage autonomous driving, in response to both takeover intent score 422 and attentiveness score 420 satisfying a threshold (e.g., both are TRUE). In an embodiment, autonomous driving system 400 may present a notification indicating the deactivation of autonomous driving mode, to the driver. In an embodiment, the notification may be a visual notification provided on a display or light, or an audio notification provided through a speaker or buzzer.

It should be understood that thresholds and value types described may vary based on application without departing from the scope of the present disclosure. For example, autonomous driving system 400 may use other value types rather than Boolean for takeover intent score 422 and attentiveness score 420, such as, for example, a value between 0 and 1, 0 and 100, a percent, and each range may correspond to suitable threshold type (e.g., a value, a percentage, etc.). Different types of value and thresholds may also be applied to any of the sub-scores 408, 410, 412, and/or at blocks 414 and 416.

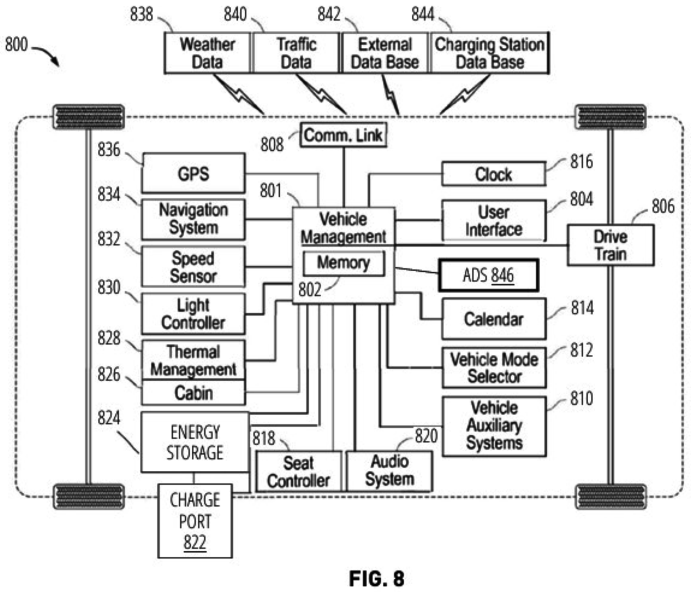

FIG. 8 is a high-level view of some embodiments of a vehicle 800, in accordance with an embodiment. Vehicle 800 can be an electric vehicle (EV), a vehicle utilizing an internal combustion engine (ICE), or a hybrid vehicle, where a hybrid vehicle utilizes multiple sources of propulsion including an electric drive system. Vehicle 800 includes a vehicle on-board system controller 801, also referred to herein as a vehicle management system, which is comprised of one or more processors (e.g., a central processing unit (CPU)). System controller 801 also includes memory 802, with memory 802 being comprised of EPROM, EEPROM, flash memory, RAM, solid state drive, hard disk drive, or any other type of memory or combination of memory types.

In some embodiments, vehicle 800 includes one or more internal networks by which system controller 801 interfaces and communicates with one or more internal subsystems of vehicle 800. System controller 801 can also use the one or more internal networks to transfer communications to and from external locations. In some embodiments, the one or more internal networks can be communicably coupled to one or more networks through a network interface. The network interface can provide for wired and/or wireless communication. When used in a local area networking environment (or a wide area networking environment), the network interface can include an Ethernet interface and the one or more internal networks includes an Ethernet communication network (e.g., an Ethernet Ring, etc.) with an Ethernet Port. Other possible embodiments use other communication devices. For example, in some embodiments vehicle 800 includes a modem for communicating across an internal network and/or with an external network.

In some embodiments, vehicle 800 includes a charge port 822 and one or more batteries (e.g., battery pack, etc.), and a battery charger, as an energy storage system 824 that provides power to portions of vehicle 800. The charge port 822 is used for providing voltage to vehicle 800 for charging the energy storage system 824 (e.g., charging batteries by the use of, for example, an EVSE or other power source in a manner well-known in the art. The charging port 822 can be used to transfer power from a battery of the energy storage system 824 to an external location as part of a vehicle-to-grid power transfer. In some embodiments, charging port 822 includes a communication path for communications between the system controller 801 and the locations external to vehicle 800 such as, for example, the power source providing power (voltage) to vehicle 800 for charging batteries of the energy storage system 824 and a utility distributed energy resource management system (DERMS) or an electric utility company and its facilities.

In some embodiments, energy storage system 824 includes an inverter that generates voltage for transfer to an electric power grid. In some embodiments, the inverter converts DC voltage to AC voltage for transfer to the electric power grid. In some embodiments, the same inverter (or a separate invertor) converts DC voltage to AC voltage for charging a battery of the energy storage system 824 or can provide DC to AC voltage conversion when providing power to an electrical power grid as part of a vehicle-to-grid operation. In the case of DC fast charging, the inverter may be bypassed to charge the battery pack directly with DC voltage from a charger that is connected to 822.

In some embodiments, vehicle 800 includes a user interface 804 is coupled to vehicle management system 801. Interface 804 allows the driver, or a passenger, to interact with the vehicle management system, for example inputting data into the navigation system 834, altering the heating, ventilation and air conditioning (HVAC) system via the thermal management system 826, controlling the vehicle's entertainment system (e.g., radio, CD/DVD player, etc.), adjusting vehicle settings (e.g., seat positions, light controls, etc.), and/or otherwise altering the functionality of vehicle 800. In some embodiments, user interface 804 also includes means for the vehicle management system to provide information to the driver and/or passenger, information such as a navigation map or driving instructions (e.g., via the navigation system 834 and GPS system 836) as well as the operating performance of any of a variety of vehicle systems (e.g., battery pack charge level for an EV, fuel level for an ICE-based or hybrid vehicle, selected gear, current entertainment system settings such as volume level and selected track information, external light settings, current vehicle speed (e.g., via speed sensor 832), current HVAC settings such as cabin temperature and/or fan settings, etc.) via the thermal management system 826. Interface 405 may also be used to warn the driver of a vehicle condition (e.g., low battery charge level or low fuel level) and/or communicate an operating system malfunction (battery system not charging properly, low oil pressure for an ICE-based vehicle, low tire air pressure, etc.). Vehicle 800 can also include other features like an internal clock 816 and a calendar 814.

In some embodiments, user interface 804 includes one or more interfaces including, for example, a front dashboard display (e.g., a cockpit display, etc.) , a touch-screen display (e.g., a pilot panel, etc.), as well as a combination of various other user interfaces such as push-button switches, capacitive controls, capacitive switches, slide or toggle switches, gauges, display screens, warning lights, audible warning signals, etc. It should be appreciated that if user interface 804 includes a graphical display, controller 801 may also include a graphical processing unit (GPU), with the GPU being either separate from or contained on the same chip set as the processor. User interface 804 may be referred to as a human machine interface (HMI).

Vehicle 800 also includes a drive train 806 that can include an internal combustion engine, one or more motors, or a combination of both. The vehicle's drive system can be mechanically coupled to the front axle/wheels, the rear axle/wheels, or both, and may utilize any of a variety of transmission types (e.g., single speed, multi-speed) and differential types (e.g., open, locked, limited slip). Drive train 806 may also comprise one or more drive units each comprising a drive circuit and respective motor.

Drivers often alter various vehicle settings, either when they first enter the car or while driving, in order to vary the car to match their physical characteristics, their driving style and/or their environmental preferences. System controller 801 monitors various vehicle functions that the driver may use to enhance the fit of the car to their own physical characteristics, such as seat position (e.g., seat position, seat height, seatback incline, lumbar support, seat cushion angle and seat cushion length) using seat controller 818 and steering wheel position using an auxiliary vehicle system controller 810. In some embodiments, system controller 801 also can monitor a driving mode selector 812 which is used to control performance characteristics of the vehicle (e.g., economy, sport, normal). In some embodiments, system controller 801 can also monitor suspension characteristics using auxiliary vehicle system 810, assuming that the suspension is user adjustable. In some embodiments, system controller 801 also monitors those aspects of the vehicle which are often varied by the user in order to match his or her environmental preferences for the cabin 826, for example setting the thermostat temperature or the recirculation controls of the thermal management system 826 that uses an HVAC controller, and/or setting the radio station/volume level of the audio system using controller 820, and/or setting the lights, either internal lighting or external lighting, using light controller 830. Also, besides using user-input and on-board sensors, system controller 801 can also use data received from an external on-line source that is coupled to the controller via communication link 808 (using, for example, GSM, EDGE, UMTS, CDMA, DECT, Wi-Fi, WiMAX, etc.). For example, in some embodiments, system controller 801 can receive weather information using an on-line weather service 838 or an on-line data base 842, traffic data 840 for traffic conditions for the navigation system 834, charging station locations from a charging station database 844, etc. In some embodiments, communication link 808 comprises an Ethernet communication link with an Ethernet Port for external communications.

The system controller 801 can transfer information with the components described above over one or more internal networks, such as those, for example, described above. In some embodiments, the system controller 801 is communicably coupled to one or more of these components via an Ethernet communication network (e.g., an Ethernet Ring, etc.). The Ethernet communication network can be used to transfer other data such as data related to, but not limited to, one or more of a driver-assistance system, telematics, over-the-air updates, etc.

The vehicle may comprise a thermal management system 828 which may include one or more temperature sensors, one or more cooling systems (e.g., liquid lines, coolant, pump, fan, heatsink, heat pipe, cooler, evaporator, refrigeration, etc.).

The vehicle may comprise autonomous driving system 846, such as those described in other sections. The autonomous driving system 846 may comprise one or more computing devices on the vehicle, and sensors, cameras, etc., as described in other sections. Some or all of autonomous driving system 846 may be at least partially integral to or include other systems such as, for example, vehicle management 801, or other systems.

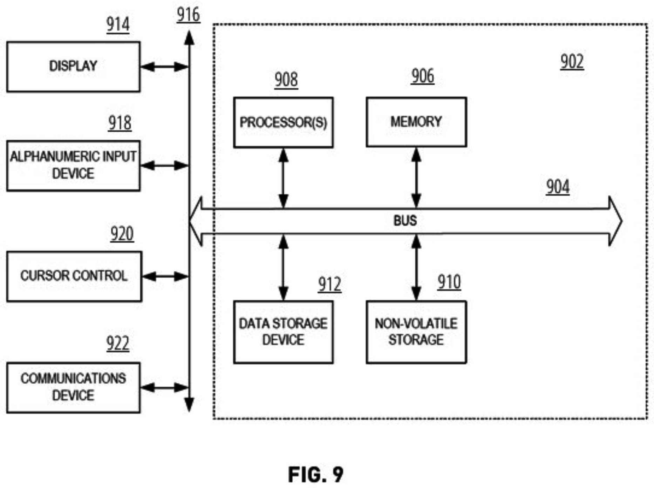

FIG. 9 is an example embodiment of a computer system that may perform operations described, in accordance with an embodiment. For example, one or more computer systems as illustrated in FIG. 9 may be integral to an autonomous driving system that performs safeguarded disengagement of autonomous driving, as described in other sections. It will be apparent to those of ordinary skill in the art, however that other alternative systems of various system architectures may also be used.

The computer system 902 illustrated in FIG. 9 includes a bus or other internal communication means 904 for communicating information, and one or more processors 908 coupled to the bus 904 for processing information. The system further comprises a random access memory (RAM) or other volatile storage device 906 (referred to as memory), coupled to bus 904 for storing information and instructions to be executed by processor 908. Main memory 906 also may be used for storing temporary variables or other intermediate information during execution of instructions by processor 908. The system also comprises a read only memory (ROM), non-volatile storage, and/or static storage device 910 coupled to bus 904 for storing static information and instructions for processor 908, and a data storage device 912 such as a magnetic disk or optical disk and its corresponding disk drive. Data storage device 912 is coupled to bus 904 for storing information and instructions.

The system may further be coupled to a display device 914, such as a light emitting diode (LED) display or a liquid crystal display (LCD) coupled to bus 904 through bus 916 for displaying information to a computer user. An alphanumeric input device 918, including alphanumeric and other keys, may also be coupled to bus 904 through bus 916 for communicating information and command selections to processor 908. An additional user input device is cursor control device 920, such as a touchpad, mouse, a trackball, stylus, or cursor direction keys coupled to bus 904 through bus 916 for communicating direction information and command selections to processor 908, and for controlling cursor movement on display device 914.

Another device, which may optionally be coupled to computer system 902, is a communication device 922 for accessing other nodes of a distributed system via a network. The communication device 922 may include any of a number of commercially available networking peripheral devices such as those used for coupling to an Ethernet, token ring, Internet, or wide area network. The communication device 922 may further be a null-modem connection, or any other mechanism that provides connectivity between the computer system 902 and the outside world. Note that any or all of the components of this system illustrated in FIG. 9 and associated hardware may be used in various embodiments as discussed herein.

It will be appreciated by those of ordinary skill in the art that any configuration of the system may be used for various purposes according to the particular implementation. The control logic or software implementing the described embodiments can be stored in main memory 906, mass storage device 912, or other storage medium locally or remotely accessible to processor 908.

It will be apparent to those of ordinary skill in the art that the system, method, and process described herein can be implemented as software stored in main memory 906 or read only memory and executed by processor 908. This control logic or software may also be resident on an article of manufacture comprising a computer readable medium having computer readable program code embodied therein and being readable by the mass storage device 912 and for causing the processor 908 to operate in accordance with the methods and teachings herein.

The embodiments discussed herein may also be embodied in a handheld or portable device containing a subset of the computer hardware components described above. For example, the handheld device may be configured to contain only the bus 904, the processor 908, and memory 906 and/or 912. The handheld device may also be configured to include a set of buttons or input signaling components with which a user may select from a set of available options. The handheld device may also be configured to include an output apparatus such as a liquid crystal display (LCD) or display element matrix for displaying information to a user of the handheld device. Conventional methods may be used to implement such a handheld device. The implementation of embodiments for such a device would be apparent to one of ordinary skill in the art given the disclosure as provided herein.

The embodiments discussed herein may also be embodied in a special purpose appliance including a subset of the computer hardware components described above. For example, the appliance may include a processor 908, a data storage device 912, a bus 904, and memory 906, and only rudimentary communications mechanisms, such as a small touch-screen that permits the user to communicate in a basic manner with the device. In general, the more special-purpose the device is, the fewer of the elements need be present for the device to function.

It is to be understood that the above description is intended to be illustrative, and not restrictive. Many other embodiments will be apparent to those of skill in the art upon reading and understanding the above description. The scope should, therefore, be determined with reference to the appended claims, along with the full scope of equivalents to which such claims are entitled.

The foregoing description, for purpose of explanation, has been described with reference to specific embodiments. However, the illustrative discussions above are not intended to be exhaustive or to limit the described embodiments to the precise forms disclosed. Many modifications and variations are possible in view of the above teachings. The embodiments were chosen and described in order to best explain the principles and practical applications of the various embodiments, to thereby enable others skilled in the art to best utilize the various embodiments with various modifications as may be suited to the particular use contemplated.

## Claims

1. A method, performed by a controller of a vehicle, comprising:
engaging in autonomous driving of the vehicle, including controlling a steering of the vehicle;
while engaged in the autonomous driving of the vehicle,
detecting, through at least one user input device, an input from a user;
detecting, with at least one sensor, a position is associated with the user;
determining that the input from the user and the position associated with the user satisfies a condition; and
in response to the input and the position associated with the user satisfying the condition, disengaging the autonomous driving of the vehicle.

2. The method of claim 1, wherein determining that the input from the user and the position associated with the user satisfies a condition comprises:
determining a first score based at least on the input from the user;
determining a second score based on the position associated with the user; and
determining that the first score and the second score satisfies the condition.

3. The method of claim 2, wherein the user input device comprises at least one of: a brake control, a steering wheel, or a manual control, and
wherein the input from the user comprises at least one of: an input to the brake control, a torque applied to the steering wheel, or a press applied to the manual control.

4. The method of claim 3, wherein determining the first score comprises:
determining a first sub-score based on a displacement or deceleration or both that are associated with the brake control;
determining a second sub-score based on a duration of the torque applied to the steering wheel;
determining a third sub-score based on the press applied to the manual control; and
determining the first score based on the first sub-score, the second sub-score, and the third sub-score.

5. The method of claim 3, wherein the manual control is button located on the steering wheel.

6. The method of claim 4, wherein the third sub-score is determined to satisfy a threshold in response to detecting a plurality of inputs to the manual control.

7. The method of claim 2, wherein determining the second score based on the position associated with the user comprises:
detecting an eye position of the user based on an image of the user captured by a camera; and
determining the second score at least based on the eye position of the user.

8. The method of claim 7, wherein determining the second score based on the position associated with the user further comprises:
detecting whether the user is holding a steering wheel; and
determining the second score based on the eye position of the user and based on whether the user is holding the steering wheel, wherein the second score satisfies the condition in response to the eye position of the user satisfying a threshold, and detecting that the user is holding the steering wheel.

9. The method of claim 1, further comprising:
in response to the first user input and the position associated with the user not satisfying the condition, maintaining engagement of the autonomous driving of the vehicle.

10. The method of claim 1, wherein the autonomous driving of the vehicle comprises a level 3 autonomous driving that includes detecting an environment of the vehicle and actuating the steering, a throttle, or a braking based on the environment.

11. A vehicle, comprising a controller that is configured to perform operations comprising:
engaging in autonomous driving of the vehicle, including controlling a steering of the vehicle;
while engaged in the autonomous driving of the vehicle,
detecting, through at least one user input device, an input from a user;
detecting, with at least one sensor, a position is associated with the user;
determining that the input from the user and the position associated with the user satisfies a condition; and
in response to the input and the position associated with the user satisfying the condition, disengaging the autonomous driving of the vehicle.

12. The vehicle of claim 11, wherein determining that the input from the user and the position associated with the user satisfies a condition comprises:
determining a first score based at least on the input from the user;
determining a second score based on the position associated with the user; and
determining that the first score and the second score satisfies the condition.

13. The vehicle of claim 12, wherein the user input device comprises at least one of: a brake control, a steering wheel, or a manual control, and
wherein the input from the user comprises at least one of: an input to the brake control, a torque applied to the steering wheel, or a press applied to the manual control.

14. The vehicle of claim 13, wherein determining the first score comprises:
determining a first sub-score based on a displacement or deceleration or both that are associated with the brake control;
determining a second sub-score based on a duration of the torque applied to the steering wheel;
determining a third sub-score based on the press applied to the manual control; and
determining the first score based on the first sub-score, the second sub-score, and the third sub-score.

15. The vehicle of claim 13, wherein the manual control is button located on the steering wheel.
